Europäisches Patentamt

European Patent Office

Office européen des brevets

(19)

(11) EP 1 364 584 B1

(12) EUROPEAN PATENT SPECIFICATION

(45) Date of publication and mention
of the grant of the patent:
**26.10.2005 Bulletin 2005/43**

(51) Int Cl.7: **A23G 3/00**

(21) Application number: **03015833.1**

(22) Date of filing: **11.08.1998**

(54) **Taste modified hard confectionery compositions containing functional ingredients**

Wirkstoff enthaltende geschmackmodifizierte harte Konfektprodukte

Compositions de produits de confiserie dures modifiées au goût, contenant des ingrédients fonctionnels

(84) Designated Contracting States:
**AT BE CH CY DE DK ES FI FR GB GR IE IT LI LU
MC NL PT SE**
Designated Extension States:
**AL LT LV MK RO SI**

(30) Priority: **14.08.1997 US 55647 P**

(43) Date of publication of application:
**26.11.2003 Bulletin 2003/48**

(62) Document number(s) of the earlier application(s) in
accordance with Art. 76 EPC:
**98939313.7 / 1 003 382**

(73) Proprietor: **Cadbury Adams USA LLC
Wilmington, DE 19808, (US)**

(72) Inventors:
• **Bell, Anthony John
Andover, New Jersey 07821 (US)**
• **Deisseroth, Wendy
Flanders, New Jersey 07836 (US)**
• **Jordan, Jean-Marie
Springfield, New Jersey (US)**

(74) Representative: **Wilson Gunn
Charles House
148/9 Great Charles Street
Birmingham B3 3HT (GB)**

(56) References cited:
**EP-A- 0 732 064      WO-A-94/12180
US-A- 4 582 709      US-A- 4 684 528
US-A- 4 843 098      US-A- 5 073 389**

**Description**

This invention concerns the use of fats to suppress the unpleasant mouthfeel of functional ingredients in hard confectionery compositions. More specifically it concerns the use of partially hydrogenated vegetable oils to suppress the unpleasant mouthfeel of minerals and their salts in hard boiled candy compositions.

Functional ingredients, also known as nutraceuticals, are those food ingredients which generally provide therapeutic benefits when consumed in the diet. A drawback with the use of functional ingredients such as the botanicals, minerals and mineral salts, is their unpleasant mouthfeel when orally ingested, usually an unpleasant tingling sensation or astringency.

The art teaches methods for masking the unpleasant mouthfeel of the mineral zinc. U.S. Patents 4,425,325, 4,758,439, 4,684,528, 4,339,432 and 4,416,867 all teach reduction of the astringency of zinc in oral compositions by addition of glycine or other select amino acids. EP 0,251,542 uses polyoxyethylene hydrogenated castor oil (polymerized castor oil) to mask zinc and U.S. 5,002,970 uses anethole. U.S. 5,000,944 teaches reduction of astringency of zinc by dissolving zinc salt in an aqueous polyphosphate solution. U.S. 5,095,035 uses a sweet pharmaceutically acceptable carrier. U.S. 5,059,416 teaches coating zinc with a hydrophillic layer followed by a hydrophobic layer selected from fats and waxes. The resultant product is a powder or granulate.

The coating of pharmaceuticals in general with hydrophobic materials, especially lipids, with or without other materials to mask unpleasant mouthfeel, is taught in the art. These systems are generally directed toward providing coated particles of the pharmaceutical which can then be used in quick delivery formulations such as liquid suspensions, quick dissolve tablets, capsules, syrups and the like. The coatings prevent release of the pharmaceutical until it has passed from the oral cavity into the gut. U.S. Patents 5,498,447, 4,865,851, 5,635,200, 4,953,247, 5,597,844, 5,320,848 and 5,494,681, Japanese Patents 7242568 and 08333243, and WO Patent Publications 94/05260, 96/10993 and 97/03656 all concern these methods of masking mouthfeel and/or providing stability until the pharmaceutical reaches the gut.

U.S. Patent 5,073,389 teaches the separation of the functional ingredient from the candy composition matrix through use of a laminate structure, with the functional ingredient contained in layers which do not contain candy composition matrix.

Although functional ingredients have been provided in various delivery forms by those skilled in the dietary supplement and food arts, the prior art delivery forms have not satisfactorily met the consumer need to be both efficacious and have an acceptable taste for oral ingestion, particularly when delivered to the oral cavity. It would be desirable to provide the consumer with a food product, particularly with a hard confectionery product, containing functional ingredients wherein the unpleasant mouthfeel of the functional ingredient has been substantially reduced. It would be desirable to provide the consumer with a hard confectionery product which is both efficacious and have an acceptable taste.

The present invention concerns a hard boiled candy composition comprising a confectionery base, mineral or mineral salt having an unpleasant mouthfeel, and from 0.5% to 5.0% by weight of the composition of one or more partially hydrogenated vegetable oils, said amount being effective to suppress the unpleasant mouthfeel of the functional ingredient.

As a result of the present invention, improved hard confectionery products are provided which have a substantial reduction in the unpleasant organoleptic sensations associated with the functional ingredients upon release of the functional ingredient from the confection in the oral cavity.

The invention concerns the use of fats to suppress the unpleasant mouthfeel of functional ingredients, also referred to herein as nutraceuticals, in confectionery products. By "functional ingredient" or "nutraceutical" is meant a material that offers the consumer some degree of nutritional or therapeutic benefit when consumed in the diet.

Nutraceuticals having an unpleasant mouthfeel include minerals and mineral salts.

By "mineral" is meant inorganic substances, metals and the like used in the human diet. Minerals include, but are not limited to, zinc, calcium, iron and selenium. "Mineral salts" is meant to include the organic and inorganic salts of these minerals and include, but are not limited to, the gluconate, acetate, ascorbate, glycinate, citrate, chloride and sulfate. Zinc, or a zinc salt, is a preferred mineral for the practice of the present invention.

The amount of mineral or mineral salt used in the present invention may vary depending upon recommendations derived from the available scientific literature, and/or the recommended or permitted dosage for the particular agent in accordance with the guidelines of, for example, the Nutrition Labeling and Education Act of 1990 and the Dietary Supplement Health and Education Act of 1994, and the Food and Drug regulations implementing the Acts. The amount of functional ingredient present will also be governed by the constraints of the confectionery product formulation. In the practice of the present invention the hard confectionery product may contain up to 5% by weight of the mineral, or mineral salt.

The "fats" utilized by the present invention are partially hydrogenated vegetable oils. Partially hydrogenated vegetable oils, include but are not limited to partially hydrogenated cottonseed oil, soybean oil, peanut oil, palm oil, sunflower seed oil and corn oil.

The unpleasant mouthfeel effects typically found with minerals, and mineral salts include tingling, burning, drying, and astringency. These mouthfeel effects will generally be noted immediately upon consumption for minerals or mineral salts which have a quick mouthfeel impact. All of these mouthfeel effects are generally found to be unpleasant and make the hard confectionery product in which they are incorporated less appealing. It has now surprisingly been found that when one or more partially hydrogenated vegetable oils of the present invention is added into the hard confectionery composition containing a mineral or a mineral salt, the unpleasant mouthfeel effects are suppressed providing a product which is more acceptable to the consumer palate. These effects have been found with partially hydrogenated vegetable oils present at a level of up to 5% by weight of the hard confection.

The ratio of the partially hydrogenated oil to the functional ingredient may vary over a broad range and still provide an effective suppression of the unpleasant mouthfeel associated with the ingredient. The ratio may vary from 1/1 to 1/0.1. It is preferred to use a ratio of partially hydrogenated vegetable oil to functional ingredient in a ratio of from 1.0/0.6 to 1.0/0.15. Further, while the amount of partially hydrogenated vegetable oil may be present in the hard confectionery composition in an amount of up to 5%, suitably from 0.5% to 5.0%, by weight of the composition, an amount in the range of from 0.5% to 3.5%, and especially from 0.75% to 3.0%, is preferred.

The preferred product uses a partially hydrogenated vegetable oil having a melting point of from about 95°F (35°C) to about 150°F (65.5°C), i.e. solid at ambient temperature. A preferred partially hydrogenated vegetable oil is partially hydrogenated cottonseed oil.

The confectionery compositions incorporating the nutraceuticals are referred to herein as hard confectionery compositions. A hard confectionery composition is one intended to reside in the oral cavity for a period of time while being consumed. In the practice of the present invention sugar and sugarfree hard boiled candy containing a mineral or mineral salt having an unpleasant mouthfeel, have been found to have a substantial reduction in the unpleasant organoleptic sensations associated with the nutraceutical. Therefore, in the practice of the present invention, "hard confectionery composition" is understood to include hard boiled candy compositions containing minerals or mineral salts.

In an aspect of the present invention a partially hydrogenated vegetable oil is used to suppress the unpleasant mouthfeel of a hard boiled candy containing a mineral or a mineral salt.

Hard boiled candy compositions generally have a candy base composed of a mixture of sugar and other carbohydrate bulking agents kept in an amorphous or glassy condition, preferably having from about 0.5% to about 3.0% moisture. The base may normally contain sugar and glucose in amounts of up to about 90% sugar and up to about 70% glucose syrup. Further ingredients such as flavouring agents, sweetening agents, acidulants, gelling agents, colorants and so forth may also be added. Hard boiled candies may also be prepared from non-fermentable sugars such as sorbitol, mannitol, xylitol, maltitol, isomatt, erythritol, hydrogenated starch hydrolysates and the like.

In the practice of the present invention it is preferred to include an emulsifier in the candy formulation when higher amounts of minerals or mineral salts are incorporated. The optional use of emulsifier aids in the manufacturing process. Emulsifiers include but are not limited to diactyl tartaric acid esters of monoglycerides such as PANODAN (registered trademark of Danisco), lecithin, glycerol monostearate and glycerol mon-oleate.

Hard boiled candy may be routinely prepared by conventional methods such as those involving fire cookers, vacuum cookers, and scraped-surface cookers also referred to as high speed atmospheric cookers. Once the candy mass has been properly tempered, it may be cut into workable portions or formed into desired shapes. A variety of forming techniques may be utilized depending upon the shape and size of the final product desired. A general discussion of the composition and preparation of hard confections may be found in E.B. Jackson, Ed. "Sugar Confectionery Manufacture", 2nd edition, Blackie Academic & Professional Press, Glasgow UK, (1990), at pages 129-169:

Hard gums compositions generally are a combination of a gum solution and a boiled syrup and have a moisture content of about 4-5%. The gum solution is prepared by soaking a gum, such as gum Arabic, or a mixture of the gum Arabic and gelatin, in water with gentle warming until dissolved. The syrup is a sugar and glucose mixture heated to boiling in water. The boiled syrup is poured into the gum solution with gentle mixing. Flavorants and other optional ingredients such as acids, colorants, humectants and the like, may be added. Hard gums may be formed by starch molding, sugar molding or molding techniques using plastic, metal and the like or by slabbing. Hard gums are typically formed by starch molding and such techniques are well known in the art. A discussion of hard gums and molding techniques may be found in Bernard W. Minifie, "Chocolate, Cocoa, and Confectionery", 3rd edition, Chapman & Hall, New York, NY, (1989), at pages 584, 519; and E.B. Jackson, Ed. "Sugar Confectionery Manufacture", 2nd edition, Blackie Academic & Professional Press, Glasgow UK, (1990) at page 189.

The invention is illustrated by the following non-limiting examples.

EXAMPLE 1:

The following, unflavored, hard boiled candies were prepared to illustrate the suppression of the mouthfeel effects of the nutraceuticals of the invention by a partially hydrogenated vegetable oil of the invention. The compositions were prepared by conventional manufacturing techniques.

The compositions were evaluated by a professional descriptive panel as discussed further below. Formulas 3 and 4 are controls. Formulas E and F are inventive.

| B. ZINC IN A HARD BOILED CANDY | | | | |
|---|---|---|---|---|
| INGREDIENTS | 3 | E | 4 | F |
| GRANULATED SUGAR | 52.95 | 50.15 | 53.21 | 50.46 |
| CORN SYRUP | 43.17 | 40.88 | 43.38 | 41.13 |
| ZINC | 0.88 | 0.88 | 0.41 | 0.41 |
| PARTIALLY HYDROGENATED COTTONSEED OIL | 0 | 5.09 | 0 | 5 |
| RESIDUAL MOISTURE | 3 | 3 | 3 | 3 |
| TOTAL | 100 | 100 | 100 | 100 |
| PERCENT REDUCTION IN MOUTHFEEL+ | - | 15.4 | - | 22 |

Objective mouthfeel evaluations were made by a professional descriptive panel trained to measure differences in sensory attribute intensities over time. The panel was trained in the industry accepted method of Descriptive Analysis, which uses a universal 15 point line scale and appropriate reference material to quantify intensities of relevant attributes in comestibles.

Evaluations were made by presenting panelists with control and inventive products in a computer generated randomized order in containers marked with only 3-digit random codes. The panel consisted of eight members who performed three replicate evaluations for each sample. The resulting intensity data was statistically analyzed using SAS.

Formula E was compared with formula 3, and F with 4. The results of the panel test show that a significant reduction in mouthfeel effects was noted for the inventive examples upon comparison with the corresponding control.

EXAMPLE 2:

The following flavored, hard boiled candy formulations were prepared and evaluated by a panel skilled in the confectionery arts to show taste acceptability of formulations of the invention. Formula 8 was prepared as a flavored control to provide the unsuppressed mouthfeel. Formula L is inventive.

| | 8 | L |
|---|---|---|
| CANDY BASE | 96.6379 | 96.9164 |
| ZINC CAETATE | 0.4372 | 0.4373 |
| COLOR | 0.0070 | 0.1850 |
| PARTIALLY HYDROGENATED COTTON SEED OIL | - | 1.4954 |
| MINT FLAVOR | 2.9678 | 1.1439 |

Formula 8 was found to be very drying and bitter. The drying and bitterness were both perceived to be at a palatable level in formula L.

EXAMPLE 3:

The following flavored, hard boiled candy formulations, containing zinc acetate and partially hydrogenated cottonseed oil, representative of the invention, were prepared and evaluated by a randomly selected panel of consumers. The samples containing the functional ingredients with the partially hydrogenated vegetable oils all met or exceeded acceptance levels.

| | 1 | 2 | 3 | 4 | 5 | 6 |
|---|---|---|---|---|---|---|
| CANDY BASE | 94.9025 | 95.1425 | 95.4584 | 95.4964 | 95.6791 | 94.8294 |
| ZINC ACETATE | 0.4372 | 0.4372 | 0.4373 | 0.4373 | 0.4372 | 0.4373 |
| PARTIALLY HYDROGENATEDCOTTONSEED OIL | 1.4954 | 1.4954 | 0.9969 | 0.9969 | 0.9969 | 0.9969 |

(continued)

|  | 1 | 2 | 3 | 4 | 5 | 6 |
|---|---|---|---|---|---|---|
| CHERRY FLAVOR | 3.1579 | - | 3.1019 | - | 2.8813 | - |
| MINT FLAVOR | - | 2.9206 | - | 3.0624 | - | 3.7168 |
| COLOR | 0.0070 | 0.0040 | 0.0055 | 0.0070 | 0.0055 | 0.0169 |

**Claims**

1. A hard boiled candy composition comprising

   (a) a confectionery base,
   (b) at least one mineral or mineral salt having an unpleasant mouthfeel, and
   (c) from 0.5% to 5.0% by weight of said composition of one or more partially hydrogenated vegetable oils said amount being effective to suppress said unpleasant mouthfeel of said mineral or mineral salt.

2. The candy composition according to claim 1, wherein the mineral or mineral salt is zinc, calcium, iron or selenium, or a salt thereof.

3. The candy composition according to claim 2, wherein the mineral or mineral salt is zinc or a zinc salt.

4. The candy composition according to claim 1, wherein the partially hydrogenated vegetable oils is cottonseed, soybean, peanut, palm, sunflower seed or corn oil.

5. The candy composition according to claim 4, wherein the partially hydrogenated vegetable oil is cottonseed oil.

6. The candy composition according to claim 1, wherein the partially hydrogenated vegetable oil is present at 0.5% to 3.5%.

7. The candy composition according to claim 6 wherein the partially hydrogenated vegetable oil is present at 0.75% to 3.0%.

8. The candy composition according to claim 1, wherein the ratio of the partially hydrogenated vegetable oil to the mineral or mineral salt is from 1/1 to 1/0.1.

9. The candy composition according to claim 8, wherein the ratio of the partially hydrogenated vegetable oil to the mineral or mineral salt is from 1.0/0.6 to 1.0/0.15.

10. A method for suppressing the unpleasant mouthfeel of a hard boiled candy composition which contains a mineral or mineral salt having an unpleasant mouthfeel, which comprises

    (a) providing a confectionery base containing a mineral or mineral salt having an unpleasant mouthfeel, and,
    (b) adding thereto from 0.5% to 5.0% by weight of said composition of one more partially hydrogenated vegetable oils, said amount being effective to suppress said unpleasant mouthfeel of said mineral or mineral salt.

11. The method according to claim 10, wherein the mineral or mineral salt is zinc, calcium, iron or selenium, or a salt thereof.

12. The method according to claim 11, wherein the mineral or mineral salt is zinc or a zinc salt.

13. The method according to claim 10, wherein the partially hydrogenated vegetable oil is cotton seed, soybean, peanut, palm, sunflower seed or corn oil.

14. The method according to claim 13, wherein the partially hydrogenated vegetable oil is partially hydrogenated cottonseed oil.

**15.** The method according to claim 10, wherein the partially hydrogenated vegetable oil is present at 0.5% to 3.5%.

**16.** The method according to claim 15, wherein the partially hydrogenated vegetable oil is present at 0.75% to 3.0%.

**17.** The method according to claim 10, wherein the ratio of the partially hydrogenated vegetable oil to the mineral or mineral salt is from 1/1 to 1/0.1.

**18.** The method according to claim 17, wherein the ratio of the partially hydrogenated vegetable oil to the mineral or mineral salt is from 1.0/0.6 to 1.0/0.15.

**Patentansprüche**

**1.** Hartgekochte Süßigkeitszusammensetzung mit

(a) einem Konfektgrundstoff,
(b) zumindest einem Mineral oder Mineralsalz mit einem unangenehmen Mundgefühl, und
(c) 0,5 bis 5 Gew.% der Zusammensetzung von einem oder mehreren teilweise hydrierten Pflanzenölen, deren Menge das unangenehme Mundgefühl des Minerals oder Mineralsalzes wirksam unterdrückt.

**2.** Süßigkeitszusammensetzung nach Anspruch 1,
wobei das Mineral oder Mineralsalz Zink, Calcium, Eisen oder Selen oder ein Salz davon ist.

**3.** Süßigkeitszusammensetzung nach Anspruch 2,
wobei das Mineral oder Mineralsalz Zink oder ein Zinksalz ist.

**4.** Süßigkeitszusammensetzung nach Anspruch 1,
wobei das teilweise hydrierte Pflanzenöl Baumwollsaatöl, Sojabohnenöl, Erdnussöl, Palmöl, Sonnenblumenöl oder Maisöl ist.

**5.** Süßigkeitszusammensetzung nach Anspruch 4,
wobei das teilweise hydrierte Pflanzenöl Baumwollsaatöl ist.

**6.** Süßigkeitszusammensetzung nach Anspruch 1,
wobei das teilweise hydrierte Pflanzenöl in einer Menge von 0,5 % bis 3,5 % vorliegt.

**7.** Süßigkeitszusammensetzung nach Anspruch 6,
wobei das teilweise hydrierte Pflanzenöl in einer Menge von 0,75 % bis 3,0 % vorliegt.

**8.** Süßigkeitszusammensetzung nach Anspruch 1,
wobei das Verhältnis von teilweise hydriertem Pflanzenöl zu dem Mineral oder Mineralsalz 1/1 bis 1/0,1 beträgt.

**9.** Süßigkeitszusammensetzung nach Anspruch 8,
wobei das Verhältnis von teilweise hydriertem Pflanzenöl zu dem Mineral oder Mineralsalz 1,0/0,6 bis 1,0/0,15 beträgt.

**10.** Verfahren zur Unterdrückung des unangenehmen Mundgefühls einer hartgekochten Süßigkeitszusammensetzung, die ein Mineral oder Mineralsalz mit einem unangenehmen Mundgefühl enthält, mit den Schritten

(a) Bereitstellen eines Konfektgrundstoffes, der ein Mineral oder Mineralsalz mit einem unangenehmen Mundgefühl enthält, und
(b) Zugabe von 0,5 bis 5,0 Gew.% der Zusammensetzung von einem oder mehreren teilweise hydrierten Pflanzenölen, deren Menge das unangenehme Mundgefühl des Minerals oder Mineralsalzes wirksam unterdrückt.

**11.** Verfahren nach Anspruch 10,
wobei das Mineral oder Mineralsalz Zink, Calcium, Eisen oder Selen oder ein Salz davon ist.

**12.** Verfahren nach Anspruch 11,
wobei das Mineral oder Mineralsalz Zink oder ein Zinksalz ist.

**13.** Verfahren nach Anspruch 10,
wobei das teilweise hydrierte Pflanzenöl Baumwollsaatöl, Sojabohnenöl, Erdnussöl, Palmöl, Sonnenblumenöl oder Maisöl ist.

**14.** Verfahren nach Anspruch 13,
wobei das teilweise hydrierte Pflanzenöl teilweise hydriertes Baumwollsaatöl ist.

**15.** Verfahren nach Anspruch 10,
wobei das teilweise hydrierte Pflanzenöl in einer Menge von 0,5 % bis 3,5 % vorliegt.

**16.** Verfahren nach Anspruch 15,
wobei das teilweise hydrierte Pflanzenöl in einer Menge von 0,75 % bis 3,0 % vorliegt.

**17.** Verfahren nach Anspruch 10,
wobei das Verhältnis von teilweise hydriertem Pflanzenöl zu dem Mineral oder Mineralsalz 1/1 bis 1/0,1 beträgt.

**18.** Verfahren nach Anspruch 17,
wobei das Verhältnis von teilweise hydriertem Pflanzenöl zu dem Mineral oder Mineralsalz 1,0/0,6 bis 1,0/0,15 beträgt.

**Revendications**

**1.** Une composition de bonbon dur comprenant :

(a) une base de confiserie,
(b) au moins un minéral ou sel minéral donnant lieu à une sensation déplaisante en bouche, et
(c) de 0,5% à 5,0% en poids de ladite composition de une ou plusieurs huiles végétales partiellement hydrogénées, ladite quantité étant efficace pour supprimer la dite sensation déplaisante en bouche dudit minéral ou sel minéral.

**2.** La composition de bonbon selon là revendication 1, dans laquelle le minéral ou sel minéral est le zinc, le calcium, le fer ou le sélénium ou un de leurs sels.

**3.** La composition de bonbon selon la revendication 2, dans laquelle le minéral ou sel minéral est le zinc ou un sel de zinc.

**4.** La composition de0 bonbon selon la revendication 1, dans laquelle les huiles végétales partiellement hydrogénées sont choisies dans le groupe comprenant les huiles de graine de coton, de soja, d'arachide, de palme, de graine de tournesol ou de maïs.

**5.** La composition de bonbon selon la revendication 4, dans laquelle l'huile végétale partiellement hydrogénée est l'huile de graine de coton.

**6.** La composition de bonbon selon la revendication 1, dans laquelle l'huile végétale partiellement hydrogénée est présente à raison de 0,5% à 3,5%.

**7.** La composition de bonbon selon la revendication 6, dans laquelle l'huile végétale partiellement hydrogénée est présente à raison de 0,75% à 3,0%.

**8.** La composition de bonbon selon la revendication 1, dans laquelle le rapport

$$\frac{\text{huile végétale partiellement hydrogénée}}{\text{minéral ou sel minéral}}$$

est compris entre 1/1 et 1/0,1.

9. La composition de bonbon selon la revendication 8, dans laquelle le rapport

$$\frac{\text{huile végétale partiellement hydrogénée}}{\text{minéral ou sel minéral}}$$

est compris entre 1,0/0,6 et 1,0/0,15

10. Un procédé pour supprimer la sensation déplaisante en bouche d'une composition de bonbon dur qui contient un minéral ou sel minéral donnant lieu à une sensation déplaisante en bouche, lequel procédé comprend :

   a) l'emploi d'une base de confiserie contenant un minéral ou sel minéral donnant lieu à une sensation déplaisante en bouche, et
   b) l'addition à cette base de 0,5% à 5,0% en poids de ladite composition de une ou plusieurs huiles végétales partiellement hydrogénées, ladite quantité étant efficace pour supprimer ladite sensation déplaisante en bouche dudit minéral ou sel minéral.

11. Le procédé selon la revendication 10, dans lequel le minéral ou sel minéral est le zinc, le calcium, le fer ou le sélénium ou un de leurs sels.

12. Le procédé selon la revendication 11, dans lequel le minéral ou sel minéral est le zinc ou un sel de zinc.

13. Le procédé selon la revendication 10, dans lequel les huiles végétales partiellement hydrogénées sont choisies dans le groupe comprenant les huiles de graine de coton, de soja, d'arachide, de palme, de graine de tournesol ou de maïs.

14. Le procédé selon la revendication 13, dans lequel l'huile végétale partiellement hydrogénée est l'huile de graine de coton.

15. Le procédé selon la revendication 10, dans lequel l'huile végétale partiellement hydrogénée est présente à raison de 0,5% à 3,5%.

16. Le procédé selon la revendication 15, dans lequel l'huile végétale partiellement hydrogénée est présente à raison de 0,75% à 3,0%.

17. Le procédé selon la revendication 10, dans lequel le rapport

$$\frac{\text{huile végétale partiellement hydrogénée}}{\text{minéral ou sel minéral}}$$

est compris entre 1/1 et 1/0,1

18. Le procédé selon la revendication 17, dans lequel le rapport

$$\frac{\text{huile végétale partiellement hydrogénée}}{\text{minéral ou sel minéral}}$$

est compris entre 1,0/0,6 et 1,0/0,15.